# EUROPÄISCHE PATENTSCHRIFT

(11) **EP 2 782 229 B1**
(45) Veröffentlichungstag und Bekanntmachung des Hinweises auf die Patenterteilung: **13.11.2019**
(21) Anmeldenummer: 14001015.8
(22) Anmeldetag: 19.03.2014
(51) Int. Cl.: H02K 41/03, H02K 41/02, H02K 15/03, F16C 29/02, H02K 7/08, F16C 32/06

(54) **Linearmotor und Verfahren zur Herstellung eines gasgelagerten Läufers eines Linearmotors**
Linear motor and process for producing a runner of a linear motor mounted on gas bearings
Moteur linéaire procédé de fabrication d'un rotor de moteur linéaire montée sur palier à gaz

(30) Priorität: 21.03.2013 DE 102013102922
(43) Veröffentlichungstag der Anmeldung: 24.09.2014
(73) Patentinhaber: AeroLas GmbH Aerostatische Lager · Lasertechnik, 82006 Unterhaching (DE)
(72) Erfinder: Ebi, Harald, 81739 München (DE); Muth, Michael, 81737 München (DE)
(74) Vertreter: Schlimme, Wolfram

(56) Entgegenhaltungen:
- WO-A1-2007/116505
- DE-A1- 4 413 601
- DE-A1-102012 016 543
- US-A- 4 798 985
- US-A1- 2007 114 854
- US-A1- 2007 258 069
- US-A1- 2009 051 227

## Beschreibung

Die vorliegende Erfindung betrifft einen Linearmotor mit einem elektrische Spulen aufweisenden Stator, einen Permanentmagnete aufweisenden Läufer und einer Eisenrückschlusseinrichtung nach dem Oberbegriff des Patentanspruchs 1. Sie betrifft weiterhin ein Verfahren zur Herstellung eines gasgelagerten Läufers eines solchen Linearmotors gemäß dem Oberbegriff des Patentanspruchs 11.

Unter einem Linearmotor gemäß der vorliegenden Erfindung wird in dieser Patentanmeldung nicht nur ein Elektromotor verstanden, dessen Läufer sich relativ zum Stator auf einer geradlinigen Bahn bewegt, sondern auch ein Elektromotor, dessen Läufer sich relativ zum Stator auf einer gekrümmten Bahn, zum Beispiel auf einer Kreisbahn, bewegt, dessen Läufer sich also um eine Achse dreht, wobei die Spulen des Stators den Permanentmagneten des Läufers in Axialrichtung gegenübergelegen sind und nicht wie bei einem klassischen Elektromotor in Radialrichtung.

Für viele industrielle Anwendungszwecke ist es gefordert, kurzhubige Translationsbewegungen mit hoher Beschleunigung und hoher Präzision durchzuführen. Dies ist beispielsweise bei sogenannten Bestückungsautomaten in der Fertigung von Halbleiterschaltungen der Fall. Grundsätzlich ist für kurzhubige Bewegungen der Einsatz von Linearmotoren bekannt. Hohe Beschleunigungen in Verbindung mit großer Kraftentfaltung wird bei Linearmotoren dann erreicht, wenn das Magnetfeld der Permanentmagneten durch einen Eisenrückschluss geleitet wird. Dazu sind in bekannten Linearmotoren die Permanentmagneten auf einer Eisenrückschlusseinrichtung angebracht und die elektrischen Spulen sind im oder am Läufer angebracht, so dass sich die Spulen mit dem Läufer relativ zur auf der Eisenrückschlusseinrichtung angebrachten Magnetanordnung bewegen. Bei einer solchen Vorrichtung muss einerseits die Masse der Spulen mitbewegt und natürlich auch mitbeschleunigt werden und zudem ist es erforderlich, die elektrische Versorgung der Spulen zum beweglichen Läufer des Linearmotors zu übertragen, was bei kurzhubigen Bewegungen mittels flexibler elektrischer Zuleitungen erfolgt.

Sind jedoch besonders hohe Beschleunigungen in Verbindung mit kurzen Wegen, also mit einer häufigen Beschleunigungsrichtungsumkehr, durchzuführen, wie dies beispielsweise bei Bestückungsautomaten erfolgt, so ist es häufig nachteilig, die Masse der Spulen mitzubewegen.

Des Weiteren sind derartige Linearmotoren häufig so ausgebildet, dass die Läufer eine Brücke bilden, die die Magnetanordnung seitlich übergreift und bei der die Brückenpfeiler auf der Eisenrückschlusseinrichtung oder daneben gelagert sind. Dies führt zu einer Baubreite des Linearmotors, die deutlich breiter ist als die Breite der Permanentmagnetanordnung. Da die Anzugskraft zwischen Spulen und Permanentmagnetanordnung in der Mitte dieser Brücke angreift, muss zudem der Läufer sehr stabil ausgebildet sein, um ein Verbiegen durch die von der Magnetkraft verursachten Biegemomente abstützen zu können.

Die US 2007/0114854 A1 zeigt und beschreibt einen Linearbetätiger mit sich bewegenden Permanentmagneten. Dieser Linearbetätiger umfasst einen Stator, auf dem die Ankerwicklungen angeordnet sind, einen die Permanentmagneten aufweisenden bewegbaren Schlitten und einen auf der vom Stator abgewandten Seite des Schlittens stationär angeordneten Eisenrückschlussjoch. Der bewegbare Schlitten weist im Querschnitt die Form eines auf dem Kopf stehenden U auf und ist an seinen seitlichen freien Enden mittels herkömmlicher Lager auf einer Führungsschiene abgestützt. Diese seitliche Lagerabstützung führt dazu, dass im die beiden Schenkel verbindenden Mittelabschnitt des U Biegemomente auftreten, die durch entsprechende Materialdicke abgestützt werden müssen.

Die US 2009/0167103 A1 zeigt und beschreibt eine Permanentmagnetenanordnung auf einem Rotor. Die Permanentmagnete sind am Außenumfang des Rotors auf einem Rotorkörper angebracht, wobei in Umfangsrichtung zwischen den einzelnen Permanentmagneten ein geringer Abstand vorgesehen ist.

Die DE 101 42 642 A1 zeigt und beschreibt einen Elektromotor, insbesondere einen Linearmotor, bei welchem die Wicklungen des Ankers luftgekühlt sind.

Die DE 199 36 064 A1 zeigt und beschreibt ein Sekundärteil für einen Linearmotor, bei welchem Permanentmagnete auf eine metallische Trägerplatte aufgesetzt und dort gegen Verschiebung gesichert sind, wobei die gesamte Anordnung in eine Vergussmasse eingegossen wird. Der so gebildete Vergusskörper bettet die Permanentmagnete ein.

Die US 2004/0239194 A1 zeigt und beschreibt eine Magnetanordnung für einen Linearmotor, bei welchem die Permanentmagneten mit abwechselnder Polarität auf einem als Eisenrückschluss wirkenden Träger, einer magnetisch leitfähigen Platte, befestigt sind. Diese Platte ist entlang eines mit elektromagnetischen Spulen versehenen Ankers verfahrbar.

Die US 4,798,985 A offenbart einen Linearmotor mit einem luftgelagerten Läufer, wobei der Läufer den Eisenrückschluss aufweist. Der entweder eben oder in Form eines auf dem Kopf stehenden U ausgebildete Läufer stützt sich über seine freien Enden auf dem Stator ab, wodurch im mittleren Bereich des Läufers, nämlich dort, wo die Magnetkräfte wirken, Biegemomente auf den Läufer einwirken.

Die US 2006/0139615 A1 zeigt und beschreibt eine Lithographievorrichtung mit einem bewegbaren Schlitten, der auf einem Stator luftgelagert verschiebbar ist. Der den Läufer bildende Schlitten stützt sich über Luftlager am Stator ab, wobei die den Lagerdruck aufbauende Druckluft über Leitungen im Schlitten zu im Schlitten vorgesehenen Düsen geführt wird. Die Permanentmagnete sind im Schlitten oberhalb des Leitungssystems für die Lagerluft in den Korpus des Schlittens eingelassen. Eine Eisenrückschlussvorrichtung ist auf der vom Stator abgewandten Seite des Schlittens stationär angeordnet und mit einem Spulenkörper so verbunden, dass die Eisenrückschlussvorrichtung auf der von den Permanentmagneten des Schlittens abgewandte Seite der Spulen liegt.

Die US 2009/0051227 A1 zeigt und beschreibt einen Linearmotor mit einem ringförmigen, geschlitzten Kern eines Stators, wobei der Kern eine Mehrzahl von als geschlitzte Ringe ausgebildeten Kernelementen aufweist, die jeweils um 180 ° verdreht zueinander hintereinander angeordnet sind. Die Gesamtheit der Kernelemente wird in einem jeweiligen Kernelementabschnitt von einer Spulenwicklung umschlossen. Die Schlitze der abwechselnd hintereinander angeordneten Kernelemente bilden einen Durchtrittsweg für einen Läufer des Linearmotors, der sich auf diesem Weg horizontal bewegen kann. Der Läufer besteht aus einem Läuferkörper, in dem in Bewegungsrichtung eine Mehrzahl von Permanentmagneten in jeweils abwechselnder Ausrichtung hintereinander und mit Abstand zueinander angeordnet sind. In einer ersten Ausführungsform eines Läufers sind die Permanentmagnete entlang der Längserstreckung des Läufers angeordnet. Der Läuferkörper ist mit Gaseintrittslöchern und Gasaustrittslöchern versehen. Während die Gaseintrittslöcher in seitlichen und mittleren Führungsstegen des Läufers ausgebildet sind, sind die Gasaustrittslöcher im Bereich der Permanentmagnete angeordnet, wobei die Gasaustrittslöcher in einer Ausführungsform oberhalb der Permanentmagnete ausgebildet sind.

Aus der DE 10 2012 016 543 A1 ist eine Magnetplatte eines Linearmotors bekannt, die den Läufer des Linearmotors bildet. Bei der Herstellung dieser Magnetplatte wird auf eine Oberseite der auf einer Eisenplatte angebrachten Permanentmagnete ein gewebtes Tuch aufgebracht, auf dem dann eine luftblasenfreie Schutzschicht aus einem Kunstharz ausgebildet wird, wobei das Tuch mit dem Kunstharz getränkt wird.

Aufgabe der vorliegenden Erfindung ist es, einen gattungsgemäßen Linearmotor anzugeben, dessen Läufer ohne Verzicht auf mechanische Stabilität als besonders leichtes Bauteil ausgeführt werden kann und der dadurch bei verringertem Energieverbrauch hohe Beschleunigungen erreichen kann.

Diese Aufgabe wird durch den Linearmotor mit den Merkmalen des Patentanspruchs 1 gelöst.

Der Läufer kann zusätzlich auch relativ zum Stator mittels eines Gasdrucklagers gasgelagert sein.

Es wird also bei dem Linearmotor dieser Erfindung nur der mit den Permanentmagneten versehene Läufer bewegt, wobei sowohl die Spulen als auch die Eisenrückschlusseinrichtung stationär sind. Die Permanentmagnete sind somit nicht unmittelbar auf der Eisenrückschlusseinrichtung angeordnet, sondern geringfügig, also etwa um die Dicke des Lagerspalts zwischen der Eisenrückschlusseinrichtung und dem Läufer, zur Eisenrückschlusseinrichtung beabstandet. Dennoch wirkt die Eisenrückschlusseinrichtung trotz dieses geringen Abstandes in der gewünschten Weise, nämlich als Leiter für das Magnetfeld der Permanentmagneten, so dass auch dieser Linearmotor gemäß der Erfindung hohe Kräfte in Translationsrichtung aufbringen kann. Dadurch, dass im Läufer lediglich die Permanentmagnete und nicht auch die Eisenrückschlusseinrichtung vorgesehen sind, ist der Läufer entsprechend leicht ausgebildet und lässt sich daher schnell beschleunigen. Die Gasdrucklagerung besitzt den Vorteil, dass sie nahezu reibungsfrei ist, wodurch die Fähigkeit des erfindungsgemäßen Linearmotors zum Erzielen hoher Beschleunigungen ebenfalls verbessert wird. Der Läufer stellt das aktive Lagerelement dar, aus dem das Gas in den betreffenden Lagerspalt austritt und dort ein Gaspolster erzeugt, auf welchem sich der Läufer relativ zum Stator beziehungsweise zur Eisenrückschlusseinrichtung nahezu reibungsfrei bewegen kann. Die Kanalstruktur im Inneren des Läufergehäuses zwischen und neben den Permanentmagneten bildet somit eine Gasverteilungsstruktur zur Zuführung des Lagerdruckgases von der Druckgasversorgungseinrichtung zu den jeweiligen Gasaustrittsdüsen in der Lagerfläche beziehungsweise in den Lagerflächen. Die Zwischenräume zwischen den Permanentmagneten werden auf diese Weise als Gaszuführkanäle für das Lagerdruckgas genutzt und die Gasaustrittsdüsen sind dabei entlang dieses Zwischenraums, also entlang der einander gegenübergelegenen Kanten zweier benachbarter Permanentmagnete, vorgesehen. Die durch das aus den Gasaustrittsdüsen austretende Lagerdruckgas erzeugte Lagerstützkraft wirkt so in unmittelbarer Nähe der von den Permanentmagneten erzeugten Anziehungskraft gegen die Eisenrückschlusseinrichtung. Dadurch muss der Kraftfluss zwischen den Magneten und der Lagerstützkraft keine großen Wege zurücklegen und wird nur auf einer äußerst kurzen Strecke, nämlich zwischen dem jeweiligen Permanentmagneten und den entlang seiner Kante vorgesehenen Gasaustrittsdüsen durch die Tragstruktur geleitet. Dies hat zur Folge, dass auch die Tragstruktur äußerst leicht ausgebildet sein kann, da auf dieser kurzen Strecke, die der Kraftfluss durch die Tragstruktur läuft, keine wesentlichen Biegemomente auf die Tragstruktur einwirken.

Vorteilhafte Weiterbildungen des Linearmotors gemäß der Erfindung sind in den Unteransprüchen 2 bis 10 angegeben.

Vorzugsweise weist der Läufer eine Tragstruktur auf, in oder an der die Permanentmagnete angeordnet sind. Diese Tragstruktur muss beim erfindungsgemäßen Linearmotor lediglich die Aufgaben der Führung und Lagerung des Läufers sowie die Aufgabe der Aufnahme der Permanentmagneten erfüllen. Dadurch kann eine besonders leichte Tragstruktur gewählt werden, wodurch das Gewicht des Läufers noch weiter reduziert werden kann.

Dabei ist es von Vorteil, wenn die Tragstruktur ein geschlossenes Gehäuse aufweist, in dessen Innerem die Permanentmagnete angeordnet sind. Die Permanentmagnete sind so vor äußeren Einflüssen geschützt.

Weiter vorteilhaft ist es, wenn das Gehäuse von einem wannenartigen Gehäusekörper gebildet ist, der an seiner offenen Seite mit einem Deckel verschlossen ist. Dieser wannenartige Gehäusekörper kann beispielsweise aus einem Faserverbundwerkstoff, vorzugsweise Kohlefaserverbundwerkstoff, hergestellt sein und somit eine besonders niedrige Masse aufweisen.

Die Permanentmagnete sind bevorzugt im Boden des wannenartigen Gehäusekörpers vorgesehen.

Der Deckel besteht bevorzugt aus einer mit einer offenporigen Verstärkungsmatte versehenen Vergussmasse, wobei die Verstärkungsmatte vorzugsweise ein textiles Flächengebilde, beispielsweise ein Vlies, ein Gewebe oder ein Gewirk, ist. Die Verstärkungsmatte kann vorzugsweise auch aus Glasfaser oder Kohlefaser bestehen. Eine solche Verbundbauweise des Deckels ermöglicht eine kostengünstige Fertigung.

Die Vergussmasse weist in einer vorteilhaften Weiterbildung eine nach dem Aushärten bearbeitete ebene Oberfläche auf, die zur Eisenrückschlusseinrichtung weist. Auf diese Weise ist die bearbeitete ebene Oberfläche als Lagerfläche ausgebildet, über die der Läufer - beispielsweise mittels eines Luftlagers - auf der Eisenrückschlusseinrichtung abgestützt ist.

Dazu ist der Läufer zumindest relativ zur Eisenrückschlusseinrichtung luftgelagert; er kann zusätzlich auch relativ zum Stator luftgelagert sein.

In einer bevorzugten Ausführungsform sind die Gasaustrittsdüsen von Mikrolöchern gebildet.

Vorteilhaft ist es auch, wenn die die Gasaustrittsdüsen bildenden Mikrolöcher im Deckel des Gehäuses des Läufers, ausgebildet sind.

Bei einer weiteren vorteilhaften Ausführungsform, die mit anderen Ausführungsformen kombinierbar ist, weist das Gasdrucklager eine am Läufer vorgesehene weitere Lagerfläche sowie eine am Stator vorgesehene weitere Lagerfläche auf.

Der auf das Verfahren gerichtete Teil der Aufgabe wird gelöst durch das Verfahren zur Herstellung eines gasgelagerten Läufers eines erfindungsgemäßen Linearmotors gemäß Patentanspruch 11.

Der Deckel kann vollständig aus Kunststoff oder aus einem Faserverbundwerkstoff (beispielsweise Glasfaserverbundmaterial oder Kohlefaserverbundmaterial) bestehen und als vorgefertigtes Deckelteil auf dem Gehäusekörper angebracht werden, in den dann nach dem Anbringen die Mikrolöcher entsprechend dem Merkmal d) gebohrt werden.

Mittels dieses Fertigungsverfahrens ist es möglich, einen besonders kompakten gasgelagerten Läufer zu schaffen, der die vorstehend beschriebenen Vorteile aufweist. Durch das Bohren der die Gasaustrittsdüsen bildenden Mikrolöcher durch den Deckel an Orten, an denen die Zwischenräume unter dem Deckel gelegen sind, wird genau das bereits beschriebene Ziel erreicht, dass die Lagerstützkräfte, die von dem aus den Gasaustrittsdüsen austretenden Gas aufgebracht werden, unmittelbar zwischen zwei benachbarten Permanentmagneten entlang deren einander gegenüber gelegenen Kanten wirken und so die Magnetkräfte unmittelbar neben dem jeweiligen Magneten abstützen ohne dass der Kraftfluss große Wege durch den Gehäusekörper nehmen muss. Dadurch kann der Gehäusekörper sehr leicht ausgebildet werden und beispielsweise aus einem Kohlefaserverbundmaterial gefertigt werden.

Dabei wird der Deckel direkt auf den Gehäusekörper auflaminiert. Dieses Aufbringen einer Einheit aus Vergussmasse und offenporiger Verstärkungsmatte als Deckel auf die mit den Permanentmagneten versehene Gehäusewanne lässt sich schnell und einfach durchführen, wobei sich die ausgehärtete Vergussmasse nach dem Aushärten besonders effektiv oberflächenbearbeiten lässt, um eine glatte und ebene Lagerfläche für das Gaslager zu erhalten. Das zunächst erfolgende Anbringen der Verstärkungsmatte auf den Stirnflächen der Umfangswand und auf den Permanentmagneten mit einem Haftmittel fixiert die Verstärkungsmatte nicht nur für den nachfolgenden Verfahrensschritt des Aufbringens der Vergussmasse, sondern sorgt für eine besonders feste Haftung des nach dem Aushärten der Vergussmasse entstehenden Komposit-Deckels aus Vergussmasse und Verstärkungsmatte. Wird dann in die Kanalstruktur im Inneren des Läufergehäuses das Druckgas eingeleitet, so sorgt die Haftung der Verstärkungsmatte auf der Umfangswand der Gehäusewanne für eine Abdichtung der dann mit der Vergussmasse durchtränkten Verstärkungsmatte, wenn durch das Aushärten der feste Deckel entstanden ist. Zudem bewahrt die Haftung der Verstärkungsmatte auf den einzelnen Permanentmagneten den später aus der Vergussmasse und der Verstärkungsmatte entstehenden Deckel vor einer Verformung unter dem in den Kanälen im Inneren des Gehäuses herrschenden Gasdruck.

Der Deckel beult also unter dem Gasdruck nicht aus, so dass die äußere Oberfläche des Deckels bildende Lagerfläche eben und glatt bleibt, auch wenn das Druckgas in der Kanalstruktur im Inneren des Gehäuses des Läufers anliegt.

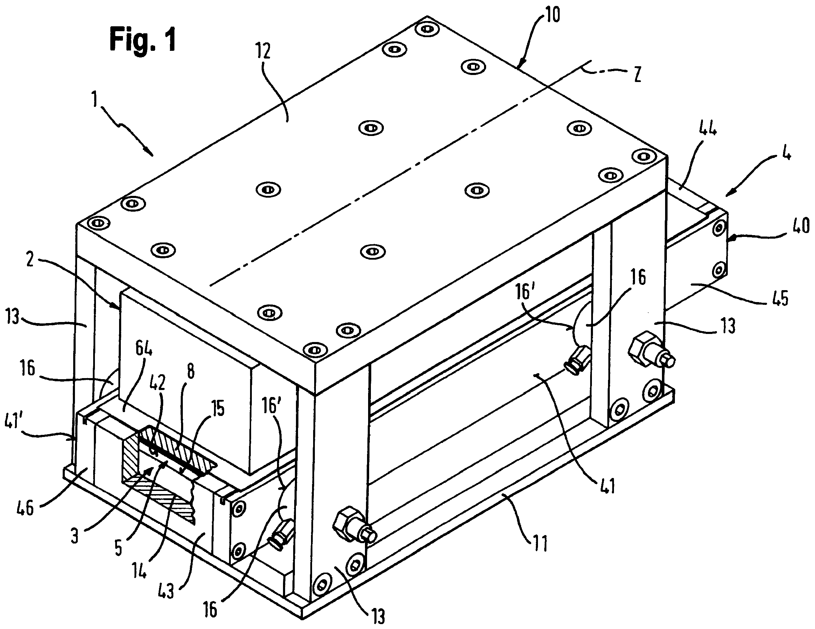

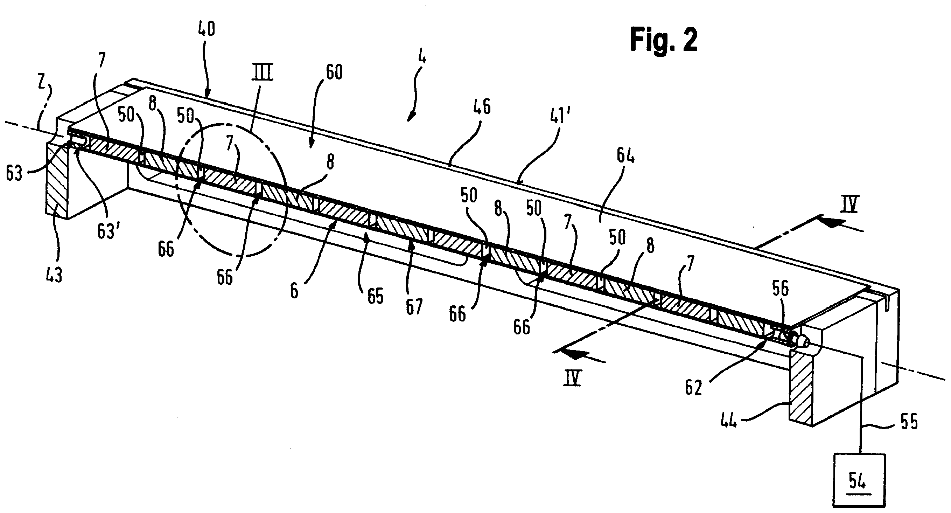

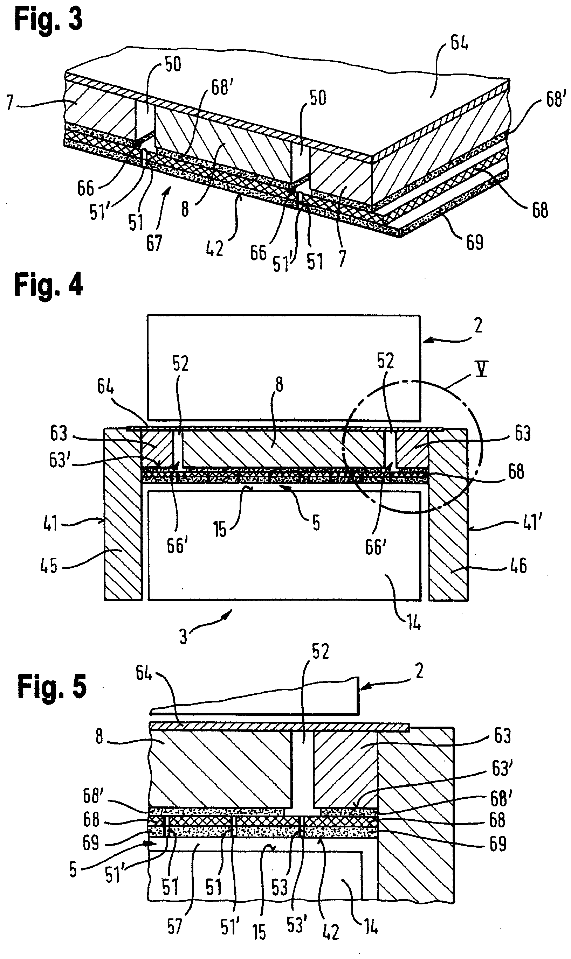

## Patentansprüche

1. Linearmotor mit einem elektrische Spulen aufweisenden Stator (2), einem Permanentmagnete (7, 8) aufweisenden Läufer (4) und einer Eisenrückschlusseinrichtung (3),
- wobei der Läufer (4) zwischen dem Stator (2) und der Eisenrückschlusseinrichtung (3) angeordnet und zu diesen beabstandet ist,
- wobei der Läufer (4) relativ zum Stator (2) und zur Eisenrückschlusseinrichtung (3) entlang einer Längsachse (Z) axial bewegbar angeordnet ist,
- wobei die Permanentmagnete (7, 8) in einem zwischen Stator (2) und Eisenrückschlusseinrichtung (3) gelegenen Abschnitt des Läufers (4) vorgesehen sind,
- wobei die jeweils einander benachbarten Permanentmagnete (7, 8) des Läufers (4) voneinander beabstandet sind und so jeweils zwischen sich einen ersten Zwischenraum (66) bestimmen,
- wobei der Läufer (4) zumindest relativ zur Eisenrückschlusseinrichtung (3) mittels eines Gasdrucklagers (5) gasgelagert ist,
- wobei der Läufer (4) mit einer Mehrzahl von mit einer Druckgasversorgungseinrichtung (54) in Fluidverbindung stehenden inneren Kanälen (50, 52) mit quer zur Längsachse (Z) verlaufenden inneren Kanälen (50) versehen ist,
- wobei die quer zur Längsachse (Z) verlaufenden inneren Kanäle (50) durch die ersten Zwischenräume (66) bestimmt sind,
- wobei das Gasdrucklager (5) zumindest eine am Läufer (4) vorgesehene erste Lagerfläche (42) sowie eine an der Eisenrückschlusseinrichtung (3) vorgesehene zweite Lagerfläche (15) aufweist,
- wobei die am Läufer (4) vorgesehene erste Lagerfläche (42) eine Mehrzahl von ersten und weiteren Gasaustrittsdüsen (51', 53') aufweist,
- wobei die Gasaustrittsdüsen (51', 53') mit dem Inneren der Kanäle (50, 52) in Fluidverbindung stehen und
- wobei die ersten Gasaustrittsdüsen (51') in die quer verlaufenden inneren Kanäle (50) münden.

2. Linearmotor nach Anspruch 1,
**dadurch gekennzeichnet,**
**dass** der Läufer (4) eine Tragstruktur (6) aufweist, in oder an der die Permanentmagnete (7, 8) angeordnet sind.

3. Linearmotor nach Anspruch 2,
**dadurch gekennzeichnet,**
**dass** die Tragstruktur (6) ein geschlossenes Gehäuse (60) aufweist, in dessen Innerem die Permanentmagnete (7, 8) angeordnet sind.

4. Linearmotor nach Anspruch 3,
**dadurch gekennzeichnet,**
**dass** das Gehäuse (60) von einem wannenartigen Gehäusekörper (62), der an seiner offenen Seite mit einem Deckel (67) verschlossen ist, gebildet ist.

5. Linearmotor nach Anspruch 4,
**dadurch gekennzeichnet,**
**dass** die Permanentmagnete im Boden (64) des wannenartigen Gehäusekörpers (62) vorgesehen sind.

6. Linearmotor nach Anspruch 4 oder 5,
**dadurch gekennzeichnet,**
**dass** der Deckel (67) aus einer mit einer offenporigen Verstärkungsmatte (68) versehenen Vergussmasse (69) besteht, wobei die Verstärkungsmatte (68) vorzugsweise ein textiles Flächengebilde, beispielsweise ein Vlies, ein Gewebe oder ein Gewirk, ist.

7. Linearmotor nach Anspruch 6,
**dadurch gekennzeichnet,**
**dass** die Vergussmasse (69) eine nach dem Aushärten bearbeitete ebene Oberfläche aufweist, die zur Eisenrückschlusseinrichtung (3) weist.

8. Linearmotor nach einem der vorhergehenden Ansprüche,
**dadurch gekennzeichnet,**
**dass** der Läufer (4) zumindest relativ zur Eisenrückschlusseinrichtung (3) luftgelagert ist.

9. Linearmotor nach einem der vorhergehenden Ansprüche,
**dadurch gekennzeichnet,**
**dass** die Gasaustrittsdüsen (51', 53') von Mikrolöchern (51, 53) gebildet sind, wobei die die ersten Gasaustrittsdüsen (51') bildenden ersten Mikrolöcher (51) bevorzugt in einem Deckel (67) des Gehäuses (60) des Läufers (4) ausgebildet sind.

10. Linearmotor nach einem der vorhergehenden Ansprüche,
**dadurch gekennzeichnet,**
**dass** das Gasdrucklager (5) eine am Läufer (4) vorgesehene weitere Lagerfläche sowie eine am Stator (2) vorgesehene weitere Lagerfläche aufweist.

11. Verfahren zur Herstellung eines gasgelagerten Läufers (4) eines Linearmotors (1) nach einem der vorhergehenden Ansprüche,
mit den Schritten:
a) Bereitstellen eines mit einer wannenartigen Ausnehmung (65) und einer Umfangswand (63) versehenen Gehäusekörpers (62);
b) Anbringen der Permanentmagnete (7, 8) in der wannenartigen Ausnehmung (65) derart, dass einander benachbarte Permanentmagnete (7, 8) voneinander beabstandet sind und so jeweils zwischen sich einen ersten Zwischenraum (66) bestimmen, der jeweils einen der quer zur Längsachse (Z) verlaufenden inneren Kanäle (50) bildet;
c) Anbringen eines Deckels (67) auf dem Gehäusekörper (62) und auf den Permanentmagneten (7, 8);
d) Bohren von die ersten Gasaustrittsdüsen (51') bildenden ersten Mikrolöchern (51) durch den die erste Lagerfläche (42) bildenden Deckel (67) an Orten, an denen die ersten Zwischenräume (66) unter dem Deckel (67) gelegen sind;
wobei der Schritt c) des Anbringens eines Deckels (67) in folgenden Teilschritten ausgeführt wird:
c1) Aufbringen von Haftmittel (68') auf die vom Boden der wannenartigen Ausnehmung (65) abgewandte, freie Oberfläche der Permanentmagnete (7, 8) sowie auf die Stirnfläche (63') der Umfangswand (63);
c2) Positionieren der offenporigen Verstärkungsmatte (68) auf der Stirnfläche (63') der Umfangswand (63) und auf den Permanentmagneten (7, 8) und Fixieren der Verstärkungsmatte (68) an der Umfangswand (63) und den Permanentmagneten (7, 8) mittels des Haftmittels (68');
c3) Aufbringen der Vergussmasse (69) auf die offenporige Verstärkungsmatte (68), wobei die Viskosität der Vergussmasse (69), deren Aushärtezeit, die Offenporigkeit der Verstärkungsmatte (68) und die Dicke der Verstärkungsmatte (68) so aufeinander abgestimmt sind, dass die Vergussmasse (69) die Verstärkungsmatte (68) tränkt aber nicht durch sie hindurch in die Zwischenräume (66, 66') fließt;
c4) Aushärten der Vergussmasse (69) und
c5) Bearbeiten der äußeren Oberfläche der den Deckel (67) bildenden Einheit aus Vergussmasse (69) und Verstärkungsmatte (68), vorzugsweise Fräsen, Schleifen und Polieren der Oberfläche, um eine ebene und glatte Lagerfläche (42) für das Gasdrucklager (5) zu erhalten.

12. Verfahren nach Anspruch 11,
**dadurch gekennzeichnet,**
**dass** die Permanentmagnete (7, 8) im Schritt b) so in der wannenartigen Ausnehmung (65) angebracht werden, dass sie von der Umfangswand (63) des Gehäusekörpers (62) beabstandet sind, so dass in diesem zweiten Zwischenraum (66') zwischen den Permanentmagneten (7, 8) und der Umfangswand (63) ein Umfangskanal (52) gebildet ist, der mit den Kanälen (50) zwischen den Permanentmagneten (7, 8) in Fluidverbindung steht und in den eine Druckgaszuführung (55, 56) mündet.

13. Verfahren nach Anspruch 12,
**dadurch gekennzeichnet,**
**dass** im Schritt d) zusätzlich Gasaustrittsdüsen (53') bildende Mikrolöcher (53) in den Deckel (67) an Orten gebohrt werden, an denen der Umfangskanal (52) unter dem Deckel (67) gelegen ist.

14. Verfahren nach einem der Ansprüche 11 bis 13,
**dadurch gekennzeichnet,**
**dass** das Bohren der die Gasaustrittsdüsen (51', 53') bildenden Mikrolöcher (51, 53) mittels eines Laserstrahls, erfolgt.

## Claims

1. A linear motor, comprising a stator (2) including electrical coils, a runner (4) including permanent magnets (7, 8), and a back-iron device (3),
- wherein the runner (4) is arranged between the stator (2) and the back-iron device (3) and offset from the stator (2) and the back-iron device (3),
- wherein the runner (4) is arranged axially moveable along a longitudinal axis (Z) relative to the stator (2) and the back-iron device (3),
- wherein the permanent magnets (7, 8) are provided in a section of the runner (4) which section is situated between the stator (2) and the back-iron device (3),
- wherein respective adjacent permanent magnets (7, 8) of the runner (4) are offset from one another and are thus defining a first intermediary space (66) between two adjacent permanent magnets,
- wherein the runner (4) is gas supported at least relative to the back-iron device (3) through a gas pressure bearing (5),
- wherein the runner (4) is provided with a plurality of inner channels (50, 52) which are in fluid connection with a pressurized gas supply device (54), said plurality of inner channels (50, 52) comprising inner channels which run transverse to the longitudinal axis (Z),
- wherein the inner channels (50) which run transverse to the longitudinal axis (Z) are defined by the first intermediary spaces (66),
- wherein the gas pressure bearing (5) includes at least a first bearing surface (42) provided at the runner (4) and a second bearing surface (15) provided at the back-iron device (3),
- wherein the first bearing surface (42) provided at the runner (4) includes a plurality of first and further gas outlet nozzles (51', 53'),
- wherein the gas outlet nozzles (51', 53') are in fluid connection with the inner channels (50, 52) and
- wherein the first gas outlet nozzles (51') lead into the transversely running inner channels (50).

2. The linear motor according to claim 1,
**characterized in that**
the runner (4) includes a support structure (6) in which or at which the permanent magnets (7, 8) are arranged.

3. The linear motor according to claim 2,
**characterized in that**
the support structure (6) includes a closed housing (60) in whose interior the permanent magnets (7, 8) are arranged.

4. The linear motor according to claim 3,
**characterized in that**
the housing (60) is formed by a tub shaped housing element (62) which is closed at an open side by a cover (67).

5. The linear motor according to claim 4,
**characterized in that**
the permanent magnets are provided in a base (64) of the tub shaped housing element (62).

6. The linear motor according to claim 4 or 5,
**characterized in that**
the cover (67) is made from an encasement compound (69) provided with a open pore reinforcement mat (68),
wherein the reinforcement mat (68) is preferably a flat contexture, for example a fleece, a woven material or a knitted material.

7. The linear motor according to claim 6,
**characterized in that**
the encasement compound (69) has a flat surface that is processed after curing and oriented towards the back-iron device (3).

8. The linear motor according to one of the preceding claims,
**characterized in that**
the runner (4) is air supported at least relative to the back-iron device (3).

9. The linear motor according to one of the preceding claims,
**characterized in that**
the gas outlet nozzles (51', 53') are formed by micro holes (51, 53), wherein the first micro holes (51) forming the first gas outlet nozzles (51') are preferably formed in a cover (67) of the housing (60) of the runner (4).

10. The linear motor according to one of the preceding claims,
**characterized in that**
the gas pressure bearing (5) comprises a further bearing surface provided at the runner (4) and a further bearing surface provided at the stator (2).

11. A method for producing a gas supported runner (4) of a linear motor (1) according to one of the preceding claims,
comprising the steps:
a) providing a housing element (62) including a tub shaped recess (65) and a circumferential wall (63);
b) attaching the permanent magnets (7, 8) in the tub shaped recess (65) so that the respective adjacent permanent magnets (7, 8) are offset from one another so that they define a respective first intermediary space (66) between one another, each of said intermediary spaces forming one of said inner channels (50) which run transverse to the longitudinal axis (Z);
c) applying a cover (67) to the housing element (62) and to the permanent magnets (7, 8);
d) drilling first micro holes (51) forming the first gas outlet nozzles (51') through the cover (67) forming the first bearing surface (42) at locations where the first intermediary spaces (66) are arranged below the cover (67);
wherein step c) of applying the cover (67) is performed with the following partial steps:
c1) applying an adhesive (68') to a free surface of the permanent magnets (7, 8) that is oriented away from the base of the tub shaped recess (65) and applying the adhesive to a face (63') of the circumferential wall (63);
c2) positioning the open pore reinforcement mat (68) on the face (63') of the circumferential wall (63) and on the permanent magnets (7, 8) and fixating the reinforcement mat (68) at the circumferential wall (63) and at the permanent magnets (7, 8) through the adhesive (68');
c3) applying the encasement compound (69) to the open pore reinforcement mat (68), wherein the viscosity of the encasement compound (69), its curing time, the porosity of the reinforcement mat (68) and the thickness of the reinforcement mat (68) are matched so that the encasement compound (69) drenches the reinforcement mat (68), but does not run through the reinforcement mat (68) into the intermediary spaces (66, 66');
c4) curing the encasement compound (69) and
c5) processing the outer surface of the unit forming the cover (67) and including the encasement compound (69) and the reinforcement mat (68), advantageously milling, grinding and polishing the surface to obtain a flat and plain bearing surface (42) for the gas pressure bearing (5).

12. The method according to claim 11,
**characterized in that**
the permanent magnets (7, 8) are applied in step b) in the tub shaped recess (65) so that they are offset from the circumferential wall (63) of the housing element (62) so that a circumferential channel (52) is formed in a second intermediary space (66') between the permanent magnets (7, 8) and the circumferential wall (63), wherein the circumferential channel (52) is in fluid connection with the channels (50) between the permanent magnets (7, 8) and a pressurized gas supply (55, 65) leads into the circumferential channel (52).

13. The method according to claim 12,
**characterized in that**
step d) includes additionally drilling micro holes (53) into the cover (67) forming gas outlet nozzles (53') at locations where the circumferential channel (52) is arranged below the cover (67).

14. The method according to one of the claims 11 through 13,
**characterized in that**
drilling the micro holes (51, 53) forming the gas outlet nozzles (51', 53') is performed by a laser beam.

## Revendications

1. Moteur linéaire comportant un stator (2) présentant des bobines électriques, un rotor (4) présentant des aimants permanents (7, 8), et un moyen formant culasse de retour magnétique (3),
dans lequel
- le rotor (4) est disposé entre le stator (2) et le moyen formant culasse de retour magnétique (3) et est espacé de ceux-ci,
- le rotor (4) est disposé de façon axialement mobile suivant un axe longitudinal (Z) par rapport au stator (2) et au moyen formant culasse de retour magnétique (3),
- les aimants permanents (7, 8) sont prévus dans une portion du rotor (4) située entre le stator (2) et le moyen formant culasse de retour magnétique (3),
- les aimants permanents (7, 8) du rotor (4) adjacents l'un à l'autre sont espacés l'un de l'autre et définissent ainsi un premier entrefer respectif entre eux,
- le rotor (4) est monté à l'aide d'un palier à gaz sous pression (5) au moins par rapport au moyen formant culasse de retour magnétique (3),
- le rotor (4) est pourvu d'une pluralité de canaux intérieurs (50, 52) qui sont en liaison fluidique avec un dispositif d'alimentation en gaz sous pression (54) et qui comprennent des canaux intérieurs (50) s'étendant transversalement à l'axe longitudinal (Z),
- les canaux intérieurs (50) s'étendant transversalement à l'axe longitudinal (Z) sont définis par les premiers entrefers (66),
- le palier à gaz sous pression (5) présente au moins une première surface de palier (42) prévue sur le rotor (4) ainsi qu'une seconde surface de palier (15) prévue sur le moyen formant culasse de retour magnétique (3),
- la première surface de palier (42) prévue sur le rotor (4) présente une pluralité de premières et d'autres buses de sortie de gaz (51', 53'),
- les buses de sortie de gaz (51', 53') sont en liaison fluidique avec l'intérieur des canaux (50, 52), et
- les premières buses de sortie de gaz (51') débouchent dans les canaux intérieurs (50) s'étendant transversalement.

2. Moteur linéaire selon la revendication 1,
**caractérisé en ce que**
le rotor (4) présente une structure de support (6) dans ou sur laquelle sont disposés les aimants permanents (7, 8).

3. Moteur linéaire selon la revendication 2,
**caractérisé en ce que**
la structure de support (6) présente un boîtier fermé (60) à l'intérieur duquel sont disposés les aimants permanents (7, 8).

4. Moteur linéaire selon la revendication 3,
**caractérisé en ce que**
le boîtier (60) est formé par un corps de boîtier (62) en forme de cuve qui est refermé par un couvercle (67) sur son côté ouvert.

5. Moteur linéaire selon la revendication 4,
**caractérisé en ce que**
les aimants permanents sont prévus au fond (64) du corps de boîtier (62) en forme de cuve.

6. Moteur linéaire selon la revendication 4 ou 5,
**caractérisé en ce que**
le couvercle (67) est constitué par une masse de scellement (69) pourvue d'une natte de renforcement (68) à pores ouverts, la natte de renforcement (68) étant de préférence un élément surfacique textile, par exemple un non-tissé, un tissu ou un tricotage.

7. Moteur linéaire selon la revendication 6,
**caractérisé en ce que**
la masse de scellement (69) présente une surface plane traitée après le durcissement qui est dirigée vers le moyen formant culasse de retour magnétique (3).

8. Moteur linéaire selon l'une des revendications précédentes,
**caractérisé en ce que**
le rotor (4) est monté sur un palier à air par rapport au moyen formant culasse de retour magnétique (3).

9. Moteur linéaire selon l'une des revendications précédentes,
**caractérisé en ce que**
les buses de sortie de gaz (51', 53') sont formées par des trous microscopiques (51, 53), les premiers trous microscopiques (51) formant les premières buses de sortie de gaz (51') étant ménagés de préférence dans un couvercle (67) du boîtier (60) du rotor (4).

10. Moteur linéaire selon l'une des revendications précédentes,
**caractérisé en ce que**
le palier à gaz sous pression (5) présente une autre surface de palier prévue sur le rotor (4) ainsi qu'une autre surface de palier prévue sur le stator (2).

11. Procédé de réalisation d'un rotor (4) monté sur palier à gaz d'un moteur linéaire (1) selon l'une des revendications précédentes,
comprenant les étapes consistant à :
a) fournir un corps de boîtier (62) pourvu d'un évidement (65) en forme de cuve et d'une paroi périphérique (63) ;
b) monter les aimants permanents (7, 8) dans l'évidement (65) en forme de cuve, de telle sorte que des aimants permanents (7, 8) adjacents l'un à l'autre sont espacés l'un de l'autre et définissent ainsi un premier entrefer respectif (66) entre eux qui constitue chacun l'un des canaux intérieurs (50) s'étendant transversalement à l'axe longitudinal (Z) ;
c) monter un couvercle (68) sur le corps de boîtier (62) et sur les aimants permanents (7, 8) ;
d) percer des trous microscopiques (51), formant des premières buses de sortie de gaz (51'), à travers le couvercle (67) constituant la première surface de palier (42) à des emplacements auxquels les premiers entrefers (66) se situent au-dessous du couvercle (67) ;
l'étape c) du montage du couvercle (67) comprenant les étapes partielles suivantes consistant à :
c1) déposer un adhésif (68') sur la surface libre des aimants permanents (7, 8) détournée du fond de l'évidement (65) en forme de cuve, et sur la surface frontale (63') de la paroi périphérique (63) ;
c2) positionner la natte de renforcement (68) à pores ouverts sur la surface frontale (63') de la paroi périphérique (63) et sur les aimants permanents (7, 8), et fixer la natte de renforcement (68) sur la paroi périphérique (63) et sur les aimants permanents (7, 8) à l'aide de l'adhésif (68') ;
c3) déposer la masse de scellement (69) sur la natte de renforcement (68) à pores ouverts, la viscosité de la masse de scellement (69), son temps de durcissement, la porosité ouverte de la natte de renforcement (68) et l'épaisseur de la natte de renforcement (68) étant adaptés les uns aux autres de telle sorte que la masse de scellement (69) imprègne la natte de renforcement (68), cependant sans la traverser jusqu'aux entrefers (66, 66') ;
c4) laisser durcir la masse de scellement (69) et
c5) traiter la surface extérieure de l'unité formant le couvercle (67) et constituée par la masse de scellement (69) et par la natte de renforcement (68), de préférence fraiser, meuler et polir la surface, afin d'obtenir une surface de palier (42) plane et lisse pour le palier à gaz sous pression (5).

12. Procédé selon la revendication 11,
**caractérisé en ce que**
dans l'étape b) les aimants permanents (7, 8) sont montés dans l'évidement (65) en forme de cuve de manière à être espacés de la paroi périphérique (63) du corps de boîtier (62), de telle sorte qu'un canal périphérique (52) se forme dans ce second entrefer (66') entre les aimants permanents (7, 8) et la paroi périphérique (63), canal qui est en liaison fluidique avec les canaux (50) entre les aimants permanents (7, 8) et dans lequel débouche une alimentation en gaz sous pression (55, 56).

13. Procédé selon la revendication 12,
**caractérisé en ce que**
dans l'étape d) des trous microscopiques (53) formant les buses de sortie de gaz (53') sont percés en supplément dans le couvercle (67) à des emplacements auxquels le canal périphérique (52) se situe au-dessous du couvercle (67).

14. Procédé selon l'une des revendications 11 à 13,
**caractérisé en ce que**
le perçage des trous microscopique (51, 53) formant les buses de sortie de gaz (51', 53') s'effectue à l'aide d'un faisceau laser.
